## Europäisches Patentamt

## European Patent Office

## Office européen des brevets

(11) Veröffentlichungsnummer: **0 026 362**
**B1**

(12) # EUROPÄISCHE PATENTSCHRIFT

(45) Veröffentlichungstag der Patentschrift:
19.10.83

(51) Int. Cl.³: **B 01 D 13/04,** H 01 M 2/16 //
C25B13/06

(21) Anmeldenummer: 80105364.6

(22) Anmeldetag: 08.09.80

(54) Asbestdiaphragmen für elektrochemische Zellen und deren Herstellung.

(30) Priorität: 20.09.79 DE 2938069

(43) Veröffentlichungstag der Anmeldung:
08.04.81 Patentblatt 81/14

(45) Bekanntmachung des Hinweises auf die Patenterteilung:
19.10.83 Patentblatt 83/42

(84) Benannte Vertragsstaaten:
**DE FR GB SE**

(56) Entgegenhaltungen:
**DD-A-109 322**
**DE-A-2 426 037**
**DE-A-2 609 175**
**DE-A-2 713 101**
**DE-B-1 294 941**
**DE-B-1 918 595**
**DE-B-2 127 654**
**DE-C-1 596 241**
**US-A-4 065 534**

(73) Patentinhaber: **SIEMENS AKTIENGESELLSCHAFT,**
**Berlin und München Wittelsbacherplatz 2,**
**D-8000 München 2 (DE)**

(72) Erfinder: **Höhne, Karl, Dr., Reinigerstrasse 15,**
**D-8520 Erlangen (DE)**

Asbestdiaphragmen für elektrochemische Zellen und deren Herstellung

Die Erfindung betrifft ein Verfahren zur Herstellung von Diaphragmen für elektrochemische Zellen durch Imprägnieren von Asbestpapier mit einer Lösung eines organischen Kunststoffes in einem organischen Lösungsmittel sowie nach einem derartigen Verfahren hergestellte Asbestdiaphragmen.

Diaphragmen für elektrochemische Zellen müssen neben einer ausreichenden Porosität und einer guten chemischen Widerstandsfähigkeit gegenüber den verwendeten Medien insbesondere auch eine hohe mechanische Stabilität aufweisen. Zur Verwendung in Brennstoffelementen sind deshalb beispielsweise hochreine Asbestfasern und Kunststoffe enthaltende Asbestmembranen bekannt, bei denen der Kunststoff ein Bindemittel aus Methacrylsäureester, Polysulfonen, chlorsulfoniertem Polyäthylen oder Chloropren in Mengen von 0,5 bis 6 Gew.-%, insbesondere 1,5 bis 3 Gew.-%, bezogen auf das Gewicht der Asbestfasern, ist (DE-C-1 596 241). Bei der Herstellung der Asbestmembranen wird dabei der Kunststoff den Asbestfasern in Form einer wäßrigen Dispersion beigemischt.

Aus der DE-C-1 671 902 ist ein Verfahren zur Herstellung einer gasdichten Membran hoher mechanischer Festigkeit aus faserförmigem Asbest- oder Kohlematerial und einem Kunststoffbindemittel für elektrochemische Zellen, insbesondere Brennstoffelemente, bekannt, bei dem beim Herstellen der Membran aus dem Fasermaterial diesem ein Butadien-Styrol-Acrylnitril-Copolymerisat mit einem Anteil des Copolymerisats von 6 bis 15 Gew.-%, bezogen auf das Fasermaterial, beigegeben wird und wobei nach der Bildung der Membran die Nitrilgruppen des Copolymerisats zu Carboxylgruppen verseift werden.

Die genannten Verfahren sind jedoch für eine rationelle Fertigung von Asbestdiaphragmen für elektrochemische Zellen nicht sehr geeignet, da sie relativ aufwendig sind. Allgemein ist auch die Herstellung von Diaphragmen auf der Basis von Asbestfasern bekannt, wobei Asbestpapier mit einem Kunststoffmaterial imprägniert und anschließend — zur Entfernung des Lösungs- oder Dispersionsmittels für das Kunststoffmaterial — erwärmt wird.

Aufgabe der Erfindung ist es, ein Verfahren der vorstehend genannten Art in der Weise auszugestalten, daß — ausgehend von Asbestpapier — in rationeller Fertigung Asbestdiaphragmen hergestellt werden können, die sowohl eine große mechanische Stabilität aufweisen als auch kostengünstig sind.

Dies wird erfindungsgemäß dadurch erreicht, daß durch Extrusion hergestelltes Asbestpapier mit einer Lösung von Polyvinylchlorid oder Polysulfon behandelt wird.

Handelsübliche Asbestpapiere stehen im wesentlichen in zwei Arten zur Verfügung, die sich im Herstellungsverfahren unterscheiden. Die eine Art wird nach einem Gießverfahren gefertigt, die andere Art nach einem Extrusionsverfahren. Nach dem Gießverfahren hergestelltes Asbestpapier hat dabei den Nachteil, daß es relativ teuer ist. Asbestpapiere, die nach dem Extrusionsverfahren hergestellt werden, sind zwar bedeutend billiger, ihr Preis beträgt nur etwa 5% von dem nach dem Gießverfahren hergestellter Papiere, bei diesen Asbestpapieren tritt — offensichtlich infolge eines anisotropen Festigkeitsverhaltens — jedoch eine so stark erhöhte Neigung zur Gasundichtigkeit auf, daß sie aus Sicherheitsgründen in elektrochemischen Zellen nicht eingesetzt werden können.

Es hat sich nun aber überraschenderweise gezeigt, daß sich das Festigkeitsverhalten von nach dem Extrusionsverfahren hergestelltem Asbestpapier durch Imprägnieren mit einer Polyvinylchlorid- oder Polysulfonlösung derart seigern läßt, daß es in elektrochemischen Zellen zum Einsatz gelangen kann.

Vorteilhaft wird beim erfindungsgemäßen Verfahren eine Kunststofflösung mit einer Konzentration von etwa 2 bis 8 Gew.-% verwendet. Als Lösungsmittel dient vorzugsweise Tetrahydrofutan, es kann beispielsweise aber auch Trichloräthylen, Dichlormethan oder Aceton verwendet werden. Die Herstellung der Asbestdiaphragmen erfolgt vorzugsweise derart, daß das Asbestpapier für die Dauer von etwa 5 bis 15 min in die Kunststofflösung eingetaucht wird.

Nach dem erfindungsgemäßen Verfahren hergestellte Asbestdiaphragmen enthalten im allgemeinen etwa 5 bis 15 Gew.-% Kunststoff, d. h. Polyvinylchlorid oder Polysulfon, bezogen auf das Gesamtgewicht. Bei einem Gehalt > 15 Gew.-% steigt nämlich der elektrische Widerstand der Diaphragmen an, bei einem Gehalt < 5 Gew.-% verschlechtern sich die mechanischen Eigenschaften.

Erfindungsgemäße Asbestdiaphragmen erweisen sich beispielsweise beim Einsatz in einer $H_2/O_2$-Brennstoffbatterie mit alkalischem Elektrolyten bei der hohen Betriebstemperatur von 93°C auch noch nach weit über 500 Stunden als gasdicht. Dabei zeigen diese Diaphragmen auch keine wesentliche Einschränkung der elektrochemischen Eigenschaften.

Anhand von Beispielen soll die Erfindung noch näher erläutert werden.

Diaphragmen-Herstellung

Zur Herstellung von Asbestdiaphragmen wird handelsübliches, durch Extrudieren gefertigtes Asbestpapier für 10 min in eine 4,3%ige Lösung von Polyvinylchlorid (PVC) bzw. Polysulfon in Tetrahydrofuran getaucht. Anschließend wird das Asbestpapier durch Schütteln von überschüssigen Lösungstropfen befreit und an der Luft bei Raumtemperatur getrocknet. Daran schließt sich noch eine Nachtrocknung in einer Photopresse bei ca. 80°C für etwa 30 min an. Die auf diese Weise erhaltenen Asbestdiaphragmen weisen einen Kunststoffgehalt von ca. 10 Gew.-% auf.

### Bestimmung des sogenannten »bubble point«

Zur Bestimmung der Gasdichtigkeit der Diaphragmen wird ein mit einer Öffnung und einem Gaseinleitungsrohr versehener Hohlkörper verwendet, dessen Öffnung durch ein Asbestdiaphragme verschlossen wird. Das Asbestdiaphragma wird dabei nach außen durch ein Nickelnetz und eine sich daran anschließende Lochplatte abgestützt. Die gesamte Anordnung wird in ein mit Wasser gefülltes Becherglas getaucht und nach einer Verweilzeit von ca. 15 min wird dem Hohlkörper durch das Gaseinleitungsrohr Wasserstoff mit zunehmendem Druck so lange zugeführt, bis am Diaphragma die ersten Gasblasen zu beobachten sind, d. h. ein Gasdurchtritt durch das Diaphragma erfolgt.

### Bestimmung des sogenannten »Berstpunktes«

Zur Bestimmung des mechanischen Festigkeitsverhaltens wird die vorstehend beschriebene Anordnung verwendet, wobei allerdings das Asbestdiaphragma nicht abgestützt wird, weder durch ein Stütznetz noch durch eine Lochplatte. Hierbei wird dann der Wasserstoffdruck so lange erhöht, bis das Diaphragma durch plötzliche Rißbildung zerbirst, d. h. undicht wird.

### Bestimmung der Permeabilität

Zur Bestimmung der Durchlässigkeit der Diaphragmen für Elektrolytflüssigkeit bzw. Wasser dient ebenfalls die beschriebene Anordnung. In diesem Fall wird dem Hohlkörper durch das Gaseinleitungsrohr Wasser unter Überdruck zugeführt. Der Überdruck wird dabei durch eine Wassersäule von 88,7 cm in einer Bürette erzeugt. Die Permeabilität wird anhand der durch das Diaphragma (Fläche: 12,6 cm$^2$) tretenden Wassermenge bestimmt.

Die Ergebnisse der vorstehend genannten Untersuchungen sind in der nachfolgenden Tabelle zusammengefaßt. Die aufgeführten Werte sind dabei Durchschnittswerte, die Drükke sind Differenzdrücke.

| | Berstpunkt [bar] | »bubble point« [bar] | Permeabilität [cm$^3$/cm$^2 \cdot$ h $\cdot$ bar] |
|---|---|---|---|
| Asbestdiaphragma, unbehandelt | 0,39 | >4,0 | 65 |
| Asbestdiaphragma mit 10% PVC | 0,68 | >4,0 | 57 |
| Asbestdiaphragma mit 10% Polysulfon | 0,75 | >4,0 | 50 |

Wie der Tabelle zu entnehmen ist, erfolgt bei den erfindungsgemäßen Asbestdiaphragmen die Rißbildung (Berstpunkt) erst bei höheren Drücken. Nimmt man diese Drücke als Maß für die mechanische Festigkeit, so ist diese bei den erfindungsgemäßen Diaphragmen um ca. 75 bis 95% erhöht, d. h. im Vergleich zu unbehandelten Diaphragmen wird die mechanische Festigkeit nahezu verdoppelt. Bei anderen Asbestpapieren konnten — unter Verwendung von Polysulfon — sogar Verbesserungen bis nahezu 400% erreicht werden.

Der »bubble point« liegt sowohl bei unbehandelten Asbestdiaphragmen als auch bei den erfindungsgemäßen Diaphragmen über 4 bar.

Der Strömungswiderstand in den Poren von Asbestdiaphragmen soll möglichst klein sein, um beispielsweise das in $H_2/O_2$-Brennstoffelementen an der Anode gebildete Wasser bei einem möglichst geringen Druckabfall in den Elektrolytraum überführen zu können; ein zu hoher Druckabfall würde zum Fluten der Elektrode führen. Bei einem Stromfluß von beispielsweise 1 A/cm$^2$ werden bei der Oxidation von Wasserstoff — pro Stunde und cm$^2$ Elektrodenfläche — 0,6 ml Wasser gebildet. Um diese Wassermenge bei einem Druckabfall von 0,1 bar abführen zu können, muß die Permeabilität der Diaphragmen wenigstens 6 cm$^3$/cm$^2 \cdot$ h $\cdot$ bar betragen.

Wie der Tabelle zu entnehmen ist, liegt die Permeabilität der Asbestdiaphragmen wesentlich über dem vorstehend genannten Wert, so daß sich die durch die Imprägnierung bewirkte geringfügige Erniedrigung nicht nachteilig bemerkbar macht. Im übrigen haben weitere Umsetzungen gezeigt, daß sich durch die Imprägnierung auch der elektrische Widerstand nur geringfügig ändert, d. h. etwas erhöht.

### Elektrochemische Eigenschaften

Zur Ermittlung der elektrochemischen Eigenschaften der erfindungsgemäßen Asbestdiaphragmen werden PVC-haltige Diaphragmen in einer 3-zelligen H₂/O₂-Brennstoffbatterie mit gestützten Elektroden und freien Elektrolyten getestet. Als Anoden dienen dabei Raney-Nikkel-Titan-Elektroden, als Kathoden sedimentierte dotierte Silberelektroden; die aktive Fläche der Elektroden beträgt 340 cm². Als Elektrolyt dient 8 m KOH, die Betriebsdrücke (von H₂ und O₂) betragen 2 bar.

Die während des Betriebes der Batterie aufgenommenen Zellspannung/Stromdichte-Kennlinien lassen keinen Unterschied zu denjenigen von Batterien mit unbehandelten Asbestdiaphragmen erkennen, d. h. die elektrischen Eigenschaften werden durch die Imprägnierung nicht verändert. Bei einer Betriebstemperatur von 83° C werden beispielsweise an den einzelnen Zellen der Batterie folgende elektrische Widerstände gemessen: 0,74 0,70 und 0,72 mΩ. Auch diese Werte entsprechen denjenigen von Brennstoffelementen mit unbehandelten Asbestdiaphragmen.

Die vorstehend beschriebene Brennstoffbatterie erweist sich im übrigen auch als gasdicht: Selbst bei einer Betriebstemperatur von 93° C und nach 530 Betriebsstunden treten keine Gasundichtigkeiten auf.

Die erfindungsgemäßen Asbestdiaphragmen finden insbesondere in Brennstoffelementen mit alkalischen Elektrolyten Verwendung; daneben können sie beispielsweise aber auch in Elektrolyseuren eingesetzt werden. Bei der Verwendung in Brennstoffelementen bzw. Brennstoffbatterien können diese Asbestdiaphragmen nicht nur als Deckschichten für die Elektroden, sondern auch als Membranen in sogenannten Spaltverdampfern eingesetzt werden, in denen der Elektrolytflüssigkeit das bei der elektrochemischen Reaktion gebildete Wasser entzogen wird.

## Patentansprüche

1. Verfahren zur Herstellung von Diaphragmen für elektrochemische Zellen durch Imprägnieren von Asbestpapier mit einer Lösung eines organischen Kunststoffes in einem organischen Lösungsmittel, dadurch gekennzeichnet, daß durch Extrusion hergestelltes Asbestpapier mit einer Lösung von Polyvinylchlorid oder Polysulfon behandelt wird.

2. Verfahren nach Anspruch 1, dadurch gekennzeichnet, daß eine Kunststofflösung mit einer Konzentration von 2 bis 8 Gew.-% verwendet wird.

3. Verfahren nach Anspruch 1 oder 2, dadurch gekennzeichnet, daß als Lösungsmittel Tetrahydrofuran verwendet wird.

4. Verfahren nach einem der Ansprüche 1 bis 3, dadurch gekennzeichnet, daß das Asbestpapier für die Dauer von 5 bis 15 min in die Kunststofflösung eingetaucht wird.

5. Diaphragma, hergestellt nach dem Verfahren gemäß einem oder mehreren der Ansprüche 1 bis 4, dadurch gekennzeichnet, daß es zu 5 bis 15 Gew.-% aus Polyvinylchlorid oder Polysulfon, Rest Asbest, besteht.

## Claims

1. A process for the production of diaphragms for electro-chemical cells by impregnating asbestos paper with a solution of an organic synthetic resin in an organic solvent, characterised in that asbestos paper produces by extrusion is treated with a solution of polyvinyl chloride or polysulfone.

2. A process as claimed in Claim 1, characterised in that a synthetic resin solution having a concentration of 2 to 8% by weight is used.

3. A process as claimed in Claim 1 or Claim 2, characterised in that tetrahydrofurane is used as the solvent.

4. A process as claimed in one of Claims 1 to 3, characterised in that the asbestos paper is immersed in the synthetic resin solution for a period of 5 to 15 min.

5. A diaphragm produced in accordance with the process as claimed in one or more of Claims 1 to 4, characterised in that it consists of 5 to 15% by weight of polyvinyl chloride or polysulfone, the remainder being asbestos.

## Revendications

1. Procédé de fabrication de diaphragmes pour cellules électrochimiques par imprégnation de papier d'amiante par une solution d'une matière plastique organique dans un solvant organique, caractérisé en ce qu'il consiste à traiter le papier d'amiante fabriqué par extrusion par une solution de poly(chlorure de vinyle) ou de polysulfone.

2. Procédé selon la revendication 1, caractérisé en ce qu'il consiste à utiliser une solution de matière plastique ayant une concentration de 2 à 8% en poids.

3. Procédé selon la revendication 1 ou 2, caractérisé en ce qu'il consiste à utiliser comme solvant du tétrahydrofurane.

4. Procédé selon l'une des revendications 1 à 3, caractérisé en ce qu'il consiste à plonger le papier d'amiante pendant une durée de 5 à 15 minutes dans la solution de matière plastique.

5. Diaphragme, fabriqué par le procédé suivant une ou plusieurs des revendications 1 à 4, caractérisé en ce qu'il est constitué de 5 à 15% en poids de poly(chlorure de vinyle) ou de polysulfone, le reste étant de l'amiante.